# EUROPEAN PATENT SPECIFICATION

(11) **EP 1 454 175 B1**
(45) Date of publication and mention of the grant of the patent: **26.01.2011**
(21) Application number: 02795871.9
(22) Date of filing: 13.12.2002
(51) Int. Cl.: G02B 7/02

(54) **PRECISELY ALIGNED LENS STRUCTURE AND A METHOD FOR ITS FABRICATION**
PRÄZISE JUSTIERTE LINSENSTRUKTUR UND EINE METHODE ZUR HERSTELLUNG DERSELBEN
STRUCTURE DE LENTILLES ALIGNEE AVEC PRECISION ET PROCEDE DE FABRICATION CORRESPONDANT

(30) Priority: 14.12.2001 US 340162 P
(43) Date of publication of application: 08.09.2004
(73) Proprietor: RAYTHEON COMPANY, Waltham MA 02451-1449 (US)
(72) Inventor: STALLARD, Charles, R., Kemp, TX 75143 (US); BROOKS, Craig, Richardson, TX 75080 (US); SCHAEFER, John, P., Plano, TX 75025 (US); BORCHARD, Joseph, McKinney, TX 75071 (US); WORTHEN, Deuard, V., Richardson, TX 75081 (US)
(74) Representative: Jackson, Richard Eric
(86) International application number: PCT/US2002/039972
(87) International publication number: WO 2003/052481

(56) References cited:
- EP-A1- 0 139 979
- US-A- 5 612 826
- US-A- 5 715 091
- US-A- 5 798 876
- US-A1- 2001 051 490
- PATENT ABSTRACTS OF JAPAN vol. 2002, no. 10, 10 October 2002 (2002-10-10) -& JP 2002 182090 A (RICOH CO LTD), 26 June 2002 (2002-06-26)
- PATENT ABSTRACTS OF JAPAN vol. 011, no. 389 (P-648), 19 December 1987 (1987-12-19) -& JP 62 153908 A (RICOH CO LTD), 8 July 1987 (1987-07-08)

## Description

This invention relates to a lens structure, and, more particularly, to a lens structure wherein the optical elements are very precisely aligned.

### BACKGROUND OF THE INVENTION

Optical lenses and related optical elements arc produced and assembled to form a lens structure. For some applications, the lens structure must have a high mechanical precision and small mechanical tolerances that are desirably maintained even when the temperature is changed by moderate amounts.

In a conventional approach to fabricating a lens structure of high mechanical precision and small tolerances, the lenses are prepared from a glass or ceramic lens material transparent to the wavelengths of interest. The lenses are prepared by any appropriate fabrication technique, which usually includes final machining in the case of lens structures that are required to have high mechanical precision. A housing of sufficient strength to support and protect the lenses is prepared, usually from a metallic alloy. The housing, with mounting attachments for the lenses, is fabricated separately from the lenses by any appropriate fabrication technique, typically numerically controlled machining. The lenses arc thereafter individually assembled to the respective mounting attachments on the interior bore or the housing to form the lens structure.

These conventional fabrication techniques permit the lenses of the assembled final lens structure to have mechanical-displacement and angular tolerances on the order of 12.7-2.54 µm (0.0005-0.0001 inch), but no smaller. Achieving these tolerances requires extraordinary care in the machining of the lenses and the housing. The assembly is performed by highly skilled assembly technicians who use great care to find the optimal arrangement of the various lenses and the housing that minimize the mechanical-displacement and angular errors. In a typical case, the assembly technician carefully positions and often repositions the individual lenses within the cylindrical housing relative to each other and to the housing, until the best positioning is achieved. The elements arc then fixed In place.

The final assembly is performed at room temperature. When the finished assembly is used in a service environment that is above or below room temperature, the tolerance errors remaining in the final lens structure often become even greater due to differences in the coefficients of thermal expansion of the lenses and the housing. The result is a variation, and often a degradation, in the mechanical alignment and thence the optical performance of the lens structure as a function of temperature.

The conventional approach is sufficient for many types of optical systems. For others that are now under development the existing approaches simply do not allow the maintaining of sufficiently small mechanical-displacement and angular tolerances. There is a need for an improved approach to the design, production, and assembly of lens structures, which provides tighter tolerances, both at room temperature and at moderately elevated or reduced temperatures. The present invention fulfills this need, and further provides related advantages.
US 5,798,876 discloses a lens structure according to the preamble of claim 11.

### SUMAMRY OF THE INVENTION

The present invention provides a mechanically precisely aligned lens structure and a method for its fabrication. The lens structure is assembled to a tolerance of not greater than about 1.27 µm (0.00005 inch), and typically to a tolerance of not greater than about 0.254 µm (0.00001 inch), between the lenses. The alignment tolerance is maintained even with moderate temperature changes, and is not dependent upon the thermal expansion of the housing. The present approach allows the lens structure to be readily assembled with minimal attention to achieving the mechanical alignment.

In accordance with the invention, a method for fabricating a lens structure relative to a light path passing through the lens structure comprises the steps of first preparing a nonplastic first lens having a first-lens central optical region, and a first-lens rim between the first-lens central optical region and a first-lens periphery of the first lens, and first machining a first-lens first mating surface into the first-lens rim. The method includes second preparing a nonplastic second lens having a second-lens central optical region, and a second-lens rim between the second-lens central optical region and a second-lens periphery of the second lens, and second machining a second-lens first mating surface into the second-lens rim. The second-lens first mating surface is conformable to the first-lens first mating surface. The machining steps are preferably performed by precision diamond-point turning. The first lens is assembled to the second lens so that the first-lens first mating surface is in a contacting and facing relation to the second-lens first mating surface.

The material of construction of the lenses should not be a plastic (i.e., organic) material. Plastic lenses, popular in many applications because of their low cost, are not suitable for high-precision applications because they cannot be machined easily and cannot be machined to sufficiently close mechanical tolerances, because the variation between pieces of the nominally same materials is too great, because they have coefficients of thermal expansion that are too great, and because their optical properties vary too greatly with temperature changes.

The step of first machining desirably includes the step of first machining the first-lens first mating surface into the first-lens rim to a first-lens-first-mating-surface tolerance of less than about 1.27 µm (0.00005 inch). The step of second machining desirably includes the step of second machining the second-lens first mating surface into the second-lens rim to a seconf-lens-first-mating-surface tolerance of less than about 1.27 µm (0.00005 inch). The first lens and the second lens are thus aligned to within a first-lens/second-lens tolerance of not greater than about 1.27 µm (0.00005)(and preferably not greater than about 0.254 µm (0.00001)) inch. These tolerances are determined by the limits of the machining tolerance, and may improve further over time as the machining tolerance improve.

The first-lens first mating surface typically includes a first-lens axial positioning surface oriented at an angle to the light path of less than about 45 degrees, and preferably substantially parallel to the light path, and a first-lens pilot surface oriented at au angle to the light path of more than about 45 degrees. and preferably substantially perpendicular to the light path. Similarly, the second-lens first mating surface includes a second-lens axial positioning surface oriented at an angle to the light path of less than about 45 degrees, and preferably substantially parallel to the light path, and a second-lens pilot surface oriented at an angle to the light path of more than about 45 degrees, and preferably substantially perpendicular to the light path.

The method also may include preparing a housing having an inner wall, and a housing mating surface extending radially inwardly from the inner wall of the housing. A lens-group mating surface is machined on one member of the lens group, such that the housing mating surface is conformable to the lens-group mating surface, and so that the lens group and the housing are aligned to within a lens-group/housing tolerance of not greater than about 1.27 µm (0.00005 inch). The step or assembling includes the steps of assembling the lens-group within the housing inner wall such that the housing mating surface is in a facing and contacting relation to the lens-group mating surface, and biasing the lens-group mating surface toward the housing mating surface using a resilient biasing clement.

This basic structure of two lenses may be extended to additional lenses directly contacting the first and second lenses, and to additional lenses that are spaced apart from the first and second lenses but fabricated and assembled in a manner in which the highly precise lens structure is achieved for all of the lenses of the lens structure.

In the first case, the step of first machining includes the step of first machining a fist-lens second mating surface oppositely disposed to the first-lens first mating surface. The method further includes third preparing a nonplastic third lens having a third-lens central optical region, and a third-lens rim between the third-lens central optical region and a third-lens periphery of the third lens, and third machining a third-lens first mating surface into the third-lens rim. The third-lens first mating surface is conformable to the first-lens second mating surface. The step of assembling includes the step of assembling the first lens to the third lens so that the first-lens second mating surface is in a contacting and facing relation to the third-lens first mating surface, wherein the first lens and the third lens are aligned to within a first-lens/third-lens tolerance of not greater than about 0.00005 inch, and preferably not greater than about 0.254 µm (0.00001 inch).

In the second case, the step of second machining includes the step of second machining a second-lens second mating surface oppositely disposed to the second-lens first mating surface. The method further includes preparing a spacer-tube, and spacer-tube machining into the spacer-tube a spacer-tube first mating surface conformable to the second-lens second mating surface, and a spacer-tube second mating surface oppositely disposed to the spacer-tube first mating surface. The method further includes fourth preparing a nonplastic fourth lens having a fourth-lens central optical region, and a Fourth-lens rim between the fourth-lens central optical region and a fourth-lens periphery of the fourth lens, and fourth machining a fourth-lens first mating surface into the fourth-lens rim, wherein the fourth-lens first mating surface is conformable to the spacer-tube second mating surface. The step of assembling includes the steps of assembling the spacer tube to the second lens so that the spacer-tube first mating surface is in a contacting and facing relation to the second-lens second mating surface, and assembling the fourth lens to the spacer tube so that the fourth-lens first mating surface is in a contacting and facing relation to the spacer-tube second mating surface. The spacer tube and the fourth lens are aligned to within a spacer tube/fourth-lens tolerance of not greater than about 1.27 µm (0.00005 inch), and preferably not greater than about 0.254 µm (0.00001 inch).

A lens structure extending along a light path and comprises a lens group including a nonplastic first lens having a first-lens central optical region lying in the light path, and a first-lens rim between the first-lens central optical region and a first-lens periphery of the first lens and lying out of the light path. The first-lens rim includes a first-lens first mating surface. A nonplastic second lens has a second-lens central optical region lying in the light path, and a second-lens rim between the second-lens central optical region and a second-lens periphery of the second lens and lying out of the light path. The second-lens rim includes is second-lens first mating surface conformable to the first-lens first mating surface and in a facing and contacting relation to the first-lens first mating surface. The first lens and the second lens are aligned to within a first-lens/second-lens tolerance of not greater than about 1.27 µm (0.00005 inch). Other features discussed above and elsewhere may be incorporated into this lens structure.

A non-transmissive coating is optionally but preferably applied overlying the contacting portions of the various lenses and the spacer tube that are included in the mating surfaces. This non-transmissive coating prevents stray light from passing through the contacting mating surfaces and entering the light path 26. A radial air-bleed groove may be machined into one or both of the contacting mating surfaces of each pair of contacting elements to allow pressure equalization between the interior of the assembled lens structure and the exterior air pressure. The non-transmissive coating may be applied to the portions of the rim of each lens that do not comprise the mating surfaces, but these surfaces (other than the mating surfaces) are not contacting and preferably have small gaps 212 therebetween so that stray light is not transmitted therethrough to any appreciable degree.

In a conventional high-precision lens structure, the individual lenses are attached directly to the inner wall of the housing. The mechanical alignment of the lenses depends upon the interrelation of each lens to the housing, and upon the material properties of the housing and the relation of the material properties (particularly the coefficients of thermal expansion) of the housing and the lenses. Alignment during assembly of the lens structure is difficult and requires extensive skilled labor. In the present approach, substantially better alignment and resistance to loss of alignment with temperature changes is achieved by the use of machinable, highly stable, nonplastic materials for the lenses, joining the lenses directly to each other (or with an intermediate lens-to-lens spacer using the same materials and the same design-interface principles), and the described approach for positioning the lens elements within the housing. Alignment during assembly is achieved by assembling the lens group, and then placing the lens group into the housing and resiliently biasing it into place.

Other features and advantages of the present invention will be apparent from the following more detailed description of the preferred embodiment, taken in conjunction with the accompanying drawings, which illustrate, by way of example, the principles of the invention. The scope of the invention is not, however, limited to this preferred embodiment.

### BRIEF DESCRIPTION OF THE DRAWINGS

Figure 1 is a perspective view of a lens structure;

Figure 2 is a sectional view of the lens structure of Figure 1, taken on line 2-2;

Figure 3 is an exploded sectional view of the lens structure of Figures 1 and 2, in the same view as Figure 2;

Figure 4 is a perspective view of a grooved embodiment of the first lens; and

Figure 5 is a block diagram of a preferred method for practicing the invention.

### DETAILED DESCRIPTION OF THE INVENTION

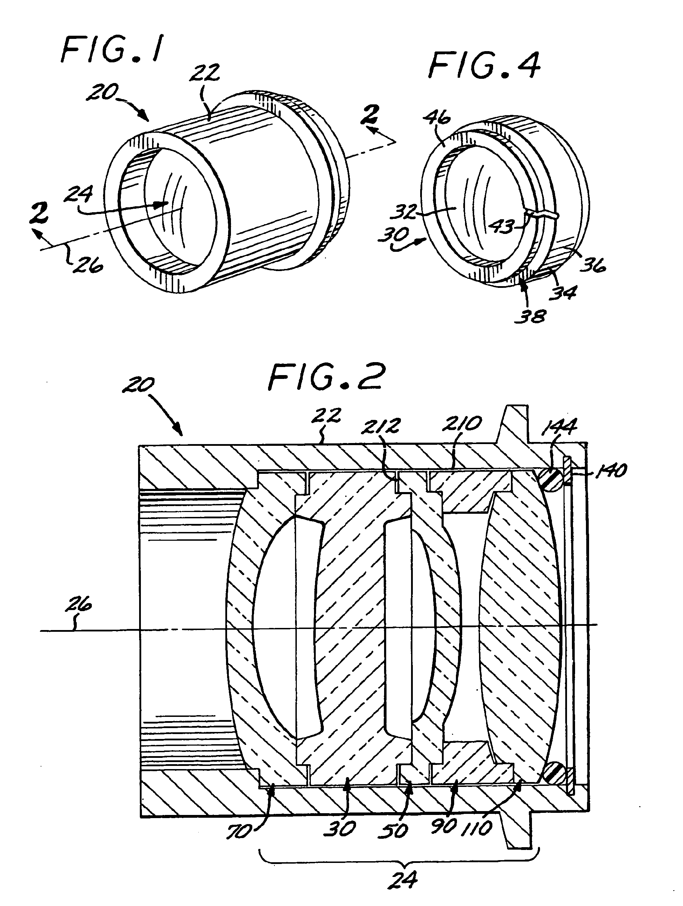

Figure 1 depicts a lens structure 20 including a housing 22 that contains a lens group 24 therein extending along a light path 26. The lens group 24 is not fully visible in Figure 1, but may be seen in Figure 2. In the preferred embodiment, the lens structure 20, the housing 22, and the lens group 24 are generally axisymmetric about the light path 26 (except possibly for incidental features such as a mounting structure on the exterior of the housing 22).

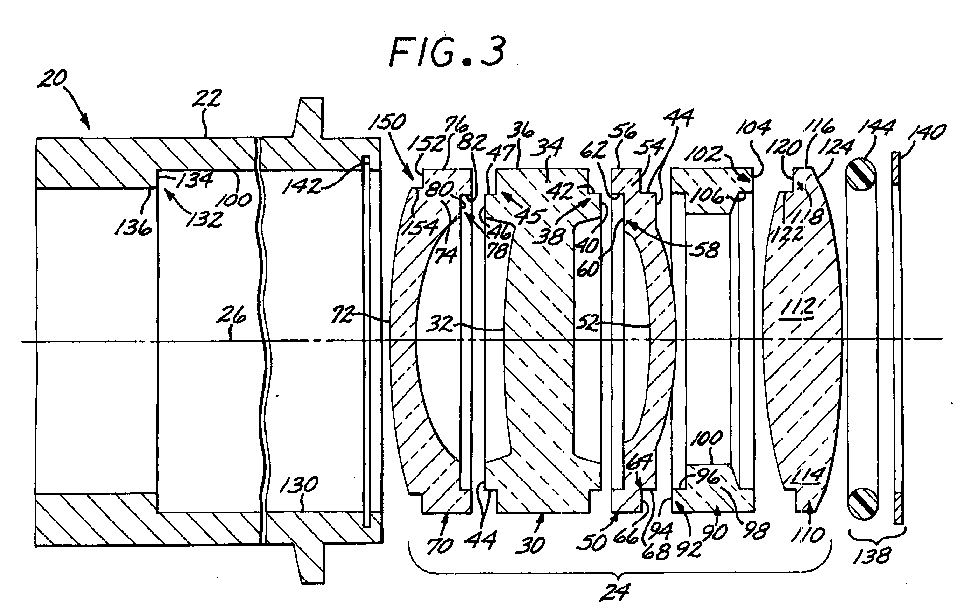

Referring to Figures 2 and 3, the lens structure 20 comprises the lens group 24 including a nonplastic first lens 30 of any operable type and shape. (The present discussion of the elements of the lens group does not follow the convention, used in some circumstances, of naming the lens closest to the scene as "lens 1", the next closest as "lens 2", and so on.) The first lens 30 has a first-lens central optical region 32 lying in the light path 26, and a first-lens rim 34 between the first-lens central optical region 32 and a first-lens periphery 36 of the first lens 30. As with all of the lenses discussed herein, the central optical region 32 may have any curvature and optical properties in the light path 26. The present approach is not limited by the curvatures and optical properties of the central optical regions of the lenses. The first-lens rim 34 lies radially outwardly from and out of the light path 26. The first-lens rim 34 includes a first-lens first mating surface 38. (As with all of the mating surfaces discussed herein, the first-lens first mating surface 38 preferably extends circumferentially around the rim 34, in the case of an axisymmetric structure.)

The lens structure 20 further includes a nonplastic second lens 50 having a second-lens central optical region 52 lying in the light path 26, and a second-lens rim 54 between the second-lens central optical region 52 and a second-lens periphery 56 of the second lens 50. The second-lens rim 54 lies radially outwardly from and out of the light path 26. The second-lens rim 54 includes a second-lens first mating surface 58 conformable to the first-lens first mating surface 38 and in a facing and contacting relation to the first-lens first mating surface 38.

Preferably, the first-lens first mating surface 3 8 includes a first-lens axial positioning surface 40 oriented at an angle to the light path 26 of less than about 45 degrees, and a first-lens pilot surface 42 oriented at an angle to the light path 26 of more than about 45 degrees. (Following the usual convention, the angle between a surface and a line is specified from a line perpendicular to, i.e., "normal to", the surface.) Similarly, the second-lens first mating surface 58 includes a second-lens axial positioning surface 60 oriented at an angle to the light path 26 of less than about 45 degrees, and a second-lens pilot surface 62 oriented at an angle to the light path 26 of more than about 45 degrees. Most preferably, the first-lens axial positioning surface 40 is oriented substantially parallel to the light path 26, and the first-lens pilot surface 42 is oriented substantially perpendicular to the light path 26; and the second-lens axial positioning surface 60 is oriented substantially parallel to the light path 26, and the second-lens pilot surface 62 is oriented substantially perpendicular to the light path 26. (All of the axial positioning surfaces and pilot surfaces discussed herein have the same types of orientations and preferred orientations.) The facing contact between the axial positioning surfaces 40 and 60 positions the lenses 30 and 50 relative to each other parallel to the light path 26. The facing contact between the pilot surfaces 42 and 62 positions the lenses 30 and 50 relative to each other in the radially outward direction perpendicular to the light path 26.

This positioning approach of the lenses 30 and 50 is to be contrasted with the conventional approach. In the conventional approach, each of the lenses is affixed to the housing, so that their positioning and tolerances are determined by the housing and the mode of fixing to the housing. In the present approach, the lenses 30 and 50 are positioned relative to each other by direct contact to each other.

The first lens 30 and the second lens 50 are aligned to each other to within a first-lens/second-lens tolerance of not greater than about 1.27 µm (0.00005 inch), and preferably not greater than about 0.254 µm (0.00001 inch). This means that the planar mating surfaces of each lens ere very accurate and perpendicular to the optical axis generated by the common, DPT machining operation. This also means that the mating pilot diameter of each mating lens is very concentric to each lens optical axis, and therefore each lens optical axis is both concentrically and angularly aligned with the mating lens optical axis. These tolerances cannot be achieved in conventional lens structures_{.}

The concept of "tolerance" in mechanical structures refers to a value of an allowable deviation in a dimension or angle from a specified nominal value, that may not he exceeded. (The "tolerance" is usually considered as a positive or negative variation from a value, and is sometimes stated in terms of a "+/-" number. In the present application, the "+/-" is omitted from the tolerance values and only the absolute value of the tolerance is stated, but the "+/-" is understood to be present.) As the tolerance becomes smaller, the value of the actual dimension or angle, as compared with the nominal dimension or angle, becomes more tightly constrained. It is therefore more difficult to achieve smaller tolerances in mechanical structures. A tolerance of 25.4 µm (0.001 inch), for example, is more readily achieved than a tolerance of 2.54mm (0.00001 inch), due to the natural variability of the manufacturing machinery, the nature of the mechanical interface, and the materials of construction. In some optical systems, a tolerance in the alignment of two lenses of 25.4 µm (0.001 inch) is acceptable, but in other cases that much tolerance from a perfect alignment causes an unacceptably large degradation in performance of the optical system. Thus, although a specified tolerance includes variation of that magnitude or smaller, the specified tolerance does not include a smaller tolerance. More specifically and for example a tolerance of 25.4 µm (0.001 inch) does not encompass or make obvious a tolerance of 1.27 µm (0.00005 inch), because the mechanical techniques used to obtain the tolerance of 25.4 µm (0.001 inch) would not lead to n mechanical technique used to obtain the tolerance of 1.27 µm (00005 inch).

The small tolerance of the present approach is achieved in part by fabricating each of the first-lens first mating surface 38 and the second lens first mating surface 58 as a machined surface. Most preferably, the mating surfaces 38 and 58 are each a precision diamond-point-turned machined surface. The shape of the optical regions 32 and 42 may be precisely machined by diamond-point turning, and that same approach may be used to machine the mating surfaces 38 and 58. The machining operation will be discussed below in greater detail.

When the first lens 30 and the second lens 50 are assembled together, the fit between the first-lens first mating surface 38 and the second-lens first mating surface 58 is so precise that the volume between the two lenses 30 and 50 is isolated. To allow pressure equilibration between the otherwise-trapped volume and the external pressure, a radially extending air-bleed groove 43 may be cut into either the first-lens first mating surface 38 or the sccond-lens first mating surface 58, as shown in Figure 4 for the groove 43 in the first-lens first mating surface 38. Such an air-bleed groove 43, where used, is typically provided between each pair of lenses in the lens group 24.

A problem encountered with the lenses made by the present approach is that the rims 34 and 54, and their respective mating surfaces 38 and 58, become so precisely aligned that they may perform as unintentionally optically transmissive structures that permit stray light to pass into the respective central optical regions 32 and 52. To prevent such intrusion of stray light into the light path 26, a coating 44 that is non-transmissive to light may be applied overlying at least that portion of the rims 34 and 54 that are included in the respective mating surfaces 38 and 58. (Other portions of the rims 34 and 54 do not contact each other, and therefore the transmission of stray light is of much less concern.) The coating 44 serves as a baffle to prevent light passage, but without adding any components between the optical elements that, if present, might interfere with their highly precise alignment. In a preferred case, the coating 44 is vapor-deposited titanium oxide (TiO) in a thickness of about 0.1 µm (1000 Angstroms). Such a coating 44 is typically applied over the mating surfaces of the rims of each lens in the lens group 24. The titanium oxide coating has a low transmittance and a desirable low reflectance. The coating 44 could also be a metal, but metals have a higher reflectance. The portions of the lens structure that are not to have the coating 44 applied thereto are marked during the deposition of the coating 44.

In the lens structure 20 of Figures 2-3, the first lens 30 further includes a first-lens second mating surface 45 oppositely disposed to the first-lens first mating surface 38. The first-lens second mating surface 45 preferably includes a first-lens second axial positioning surface 46 and a first lens second pilot surface 47, oriented comparably with the respective surfaces 40 and 42. The lens group 24 further includes a nonplastic third lens 70 having a third-lens central optical region 72 lying in the light path 26, and a third-lens rim 74 between the third-lens central optical region 72 and a third-lens periphery 76 of the third lens 70. The third-lens rim 74 lies radially outwardly from and out of the light path 26. The third-lens rim 74 includes a third-lens first mating surface 78 conformable to the first-lens second mating suface 45 and in a facing and contacting relation to the first-lens second mating surface 45. Thus, the third-lens first mating surface 78 preferably includes a third-lens axial positioning surface 80 and a third-lens pilot surface 82. The third-lens axial positioning surface 80 is in a facing and contacting relation with the first-lens second axial positioning surface 46, and the third-lens pilot surface 82 is in a facing and contacting relation with the firsrt-lens second pilot surface 47. The first lens 30 and the third lens 70 are aligned by these contacts to within a first-lens/third-lens tolerance of not greater than about 1.27 µm (0.00005 inch), and more preferably about 0.254 µm (0.00001 inch).

The spacing between the pairs of lenses 30 and 50, and between the pairs of lenses 30 and 70, may be controlled through the selected length of the respective rims measured parallel to the light path 26, as long as the spacing is not too great. In some cases, however, the lenses must be spaced further apart than is practically achieved by making the rims longer or shorter. In that case, a spacer tube of any required length may be used to increase the spacing between the lenses, and the use of such a spacer tube is illustrated in the lens group 24 of Figures 2-3. In this case, the second lens 50 further includes a second-lens second mating surface 64 oppositely disposed to the second-lens first mating surface 58. The second-lens second mating surface 64 preferably includes a second-lens seconde axial positioning surface 66 and a second-lens second pilot surface 68. The lens group 24 further includes a spacer tube 90 having a spacer-tube first mating surface 92 conformable to the second-lens second mating surface 64 and in a facing and contacting relation to the second-lens second mating surface 64. That is, the spacer tube first mating surface 92 preferably includes a conforming spacer-tube first axial positioning surface 94 and a spacer-tube first pilot surface 96, conformable and in facing contact with the respective surfaces 66 and 68. The spacer tube 90 has an elongated hollow spacer-tube body 98 with a spacer-tube bore 100 therethrough, so that the light path 26 passes through the bore 100. In the case where there is another lens at the far end of the spacer tube 90 from the second lens 50, a spacer-tube second mating surface 102 is oppositely disposed to the spacer-tube first mating surface 92 at the opposite end of the spacer-tube body 98. The spaecr-tube second mating surface 102 preferably includes a spacer-tube second axial positioning surface 104 and a spacer tube second pilot surface 106. The space tube 90 is included within the lens group 24 even though it is not itself a lens but instead spaces apart two lenses.

The lens group 24 further includes a nonplastic fourth lens 110 having a fourth-lens central optical region 112 lying in the light path 26, and a fourth-lens rim 114 between the fourth-lens central optical region 112 and a fourth-lens periphery 116 of the fourth lens 110. The fourth-lens rim 114 lies radially outwardly from and out of the light path 26. The fourth-lens rim 114 includes a fourth-lens first mating surface 118 conformable to the spacer-tube second mating surface 102 and in a facing and contacting relation to the spacer-tube seconde mating surface 102. Thus, the fourth-lens first mating surface 118 preferably includes a fourth-lens axial positioning surface 120 and a fourth-lens pilot surface 122. The fourth-lens axial positioning surface 120 is in a facing and contacting relation with the spacer-tube second axial positioning surface 104, and the fourth-lens pilot surface 122 is in a facing and contacting relation with the spacer-tube second pilot surface 106. The spacer tube 90 and the fourth lens 110 are aligned by these and the intervening contacts to within a spacer tube/fourth-lens tolerance of not greater than about 1.27 µm (0.00005 inch), and more preferably not greater than about 0.254 µm (0.00001 inch).

The various elements 30, 50, 70, 90, and 110 of the lens group 24 may be joined together and mounted by any operable technique. In one approach, an adhesive may be applied to the various mating surfaces before they are contacted together, or the adhesive may be applied externally after the mating surfaces are contacted together. However, it is preferred that adhesive not be used when the required tolerances are extremely small, because the thickness of the adhesive film may not be uniform. A nonuniformity in the adhesive thickness may lead to a wedge effect between the contacting elements that tends to cause an angular misalignment. In another approach in which the elements are nonpermanently joined and is preferred because there is no potential for the wedge effect leading to nonuniformity, the mating surfaces may be brought together, and then the housing 22 or an external mechanical clip may be used to hold the lens group 24 together, as described in more detail subsequently.

In the approach that is preferred because it holds the elements of the lens group 24 together, protects the elements, and provides an external attachment for the elements, there is provided the housing 22 having an inner wall 130. A housing mating surface 132 extends radially inwardly from the inner wall 130 of the housing 22 in the manner of an inwardly extending shoulder. The housing mating surface 132 is preferably structured in the same manner as the other mating surfaces discussed herein, with a housing axial positioning surface 134 and a housing pilot surface 136. There is further provided a lens-group mating surface 150 at one end of the lens group 24, in this case on the third rim lens 74 oppositely disposed to the third-lens first mating surface 78. Preferably, the lens-croup mating surface 150 has a lens-group axial positioning surface 152 and a lens-group pilot surface 154. The housing mating surface 132 is conformable to the lens-group mating surface 150 and in a facing and contacting relation to the lens-group mating surface 150. The lens group 21 and the housing 22 are aligned to within a lens-group/housing tolerance of not greater than about 27 µm (0.00005inch), and preferably not greater than about 0.254 µm (0.00001inch).

A resilient biasing element 138 is disposed at the opposite end of the lens group 24 from the lens-group mating surface 150. The resilient biasing clement 138 biases and fores the lens-group 24 and thence the lens-group mating surface 150 toward the housing mating surface 132. The resilient biasing element 138 may be of any type. In the preferred embodiment, the resilient biasing clement 138 includes a clip 140 that engages a recess 142 in the inner wall 130 of the housing 22. A. resilient elastomeric O-ring 144 lies between the clip 140 and a bevel 124 in the fourth lens rim 114, biasing the fourth lens 110 and thence the lens group 24 toward the housing mating surface 132. The resiliency of the O-ring 144 is sufficient to absorb dimensional changes due to differential thermal expansion between the housing 22 and the lens group 24.

This mode of attaching the housing 22 to the lens group 24 provides important advantages. The individual lenses of the lens group 24 are not directly affixed to the housing 22, and in fact there is a small gap 210 between the lens group 24 and the housing inner wall 130. The differential thermal expansion between the housing 22 and the lenses does not alter the relative spacing between the lenses and does not alter the tolerances in the mechanical orientations between the lenses. The lenses simply change their spacings without altering their orientations and without deforming, which is acceptable in many applications.

The lenses 30, 50, 70, and 110, and the spacer tube 90 are all preferably each unitary in construction (that is, each is made of a single piece of material, but they are not necessarily made from the same starting blank of material). The lenses 30, 50, 70, and 110 are made of a nonplastic material that is transparent to the wavelengths of interest. The preferred nonplastic material for applications in the visible light range is glass, and the preferred nonplastic material for applications in the mid-infrared light range is silicon. Other materials chosen for compatibility with particular wavelength ranges may be used. As discussed earlier, the elements 30, 50,70,110, and 90 may not be made of plastic or other organic material. Plastic lenses are used in many applications because of their low cost, but they are not suitable for the present high-precision application because they cannot be machined to sufficiently close mechanical tolerances, because they have coefficients of thermal expansion that are too variable, and because their optical properties vary too greatly with temperature changes. The spacer tube 90 is preferably made of the same material as are the lenses 30, 50, 70, and 110. A different material may be used for the spacer tube 90 in order to achieve particular properties such as a particular coefficient of thermal expansion.

The housing 22 is preferably made of a metal, and most preferably made of a titanium alloy such as Ti-6Al-4V, having a nominal composition of titanium-6 weight percent aluminum-4 weight percent vanadium, because it is machinable by the preferred precision diamond-point turning machining process. Other metals such as nickel alloys, aluminum alloys, beryllium alloys, and other titanium alloys may be used as well.

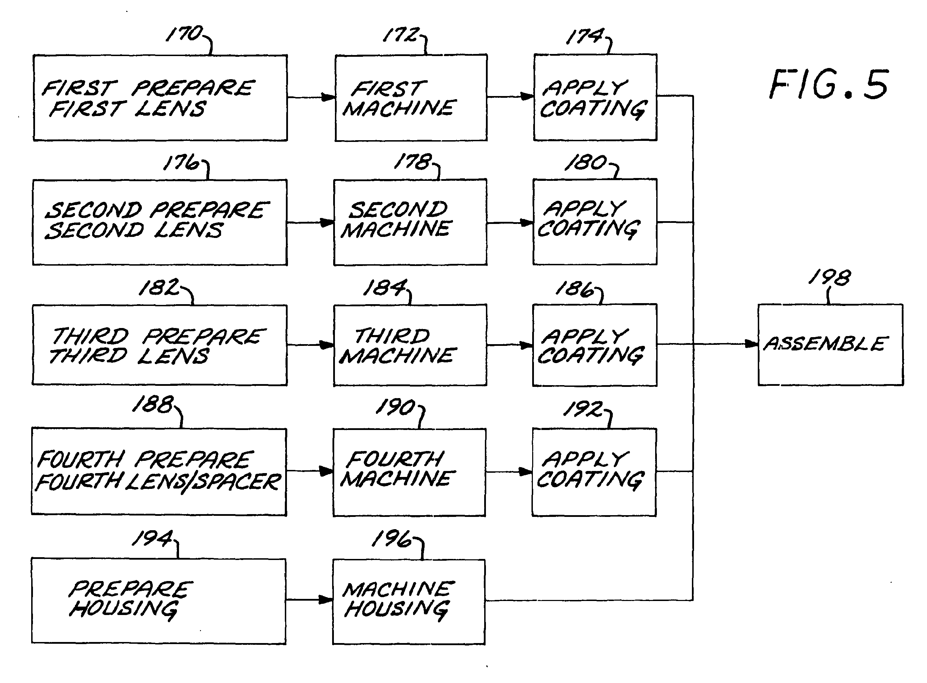

Figure 5 depicts a preferred approach for fabricating the lens structure 20. The first lens 30 is prepared, numeral 170, and first machined, numeral 172. The second lens 50 is prepared, numeral 176, and second machined, numeral 178. Where used, the third lens 70 is prepared, numeral 182, and third machined, numeral 184. Where used, the fourth lens 110 is prepared, numeral 188, and fourth machined, numeral 190. Where used, the spacer tube 90 is prepared, numeral 188, and fourth machined, numeral 190. The housing, where used, is prepared, numeral 194, and machined, numeral 196. The machining steps 172, 178, 184, and 190 produce the features discussed above for each of the cements of the lens group 24, including both the rim and the optical region in each case. That is, the central optical region of each element (for the lenses) is machined in the same machining setup as the mating surface(s) (i.e., the axial positioning surface(s) and the pilot surface(s)), ensuring that those different portions of each of the lenses and spacers having the desired spatial relationship to each other and the desired tolerances. The machining is preferably performed by precision diamond-point turning, which can achieve the dimensional accuracies required for the tolerances set forth here. Precision diamond-point turning may be performed on nonplastic, hard materials that are candidates for the elements 30, 50, 70, 110, and 90. It is not operable with plastic and other organic materials because they are too soft. It is also not operable with some many metals.

These approaches have been demonstrated to produce tolerances in the lens structure to not greater than about 1.27 µm (0.00005 inch), and in many cases to not greater than about 0.254 µm (0.00001 inch). The mating surfaces, including the various shaped features discussed herein, and the radial air-bleed grooves 43, where used, arc machined as desired in these machining steps.

After the elements are machined, the coatings 44 are applied, numerals 1774, 180, 186, and 192, to the desired non-mating-surface portions of the rims of the respective lenses 30, 50, 70, and 110. The coating is preferably accomplished by electron beam vapor deposition, using appropriately shaped masks to prevent deposition on the portions that are not to be coated.

The elements that have been machined and coated where appropriate are assembled together, numeral 198. To perform the assembly, the elements of the lens group 24 are placed with the respective mating surfaces in contact, producing an aligned lens group 24 of very high precision as a result of the precision-machined surfaces. The lens group 24 is inserted into the interior of the housing 22 until the mating surfaces 132 and 150 contact, the O-ring 144 is positioned, and the clip 140 is inserted into the recess 142. The advantages of the simplicity of this assembly approach cannot be overemphasized. In conventional optical structures, the assembly typically requires many hours of labor by a highly skilled optical assembler in trial-and-error procedures that seek to minimize alignment variations. This tedious assembly is avoided by the present approach.

The present invention has been reduced to practice using a lens structure like that shown in Figures 2-3 and the method of Figure 5.

Although a particular embodiment of the invention has been described in detail for purposes of illustration, various modifications and enhancements may he made without departing from the scope of the invention.

## Claims

1. A method for fabricating a lens structure (20) relative to a light path (26) passing through the lens structure (20), comprising the steps of:
first preparing a nonplastic first lens (30) having
a first-lens central optical region (32), and
a first-lens rim (34) between the first-lens central optical region (32) and a first-lens periphery (36) of the first lens (30);
first machining a first-lens first mating surface (38) into the first-lens rim (34);
second preparing a nonplastic second lens (50) having
a second-lens central optical region (52), and
a second-lens rim (54) between the second-lens central optical region (52) and a second-lens periphery (56) of the second lens (50);
second machining a second-lens first mating surface (58) into the second-lens rim (54), wherein the second-lens first mating surface (58) is conformable to the first-lens first mating surface (38),
at least one of the steps of first machining and second machining further including the step of machining a radial air-bleed groove (43) cut into the mating surface being machined; and
assembling the first lens (30) to the second lens (50) so that the first-lens first mating surface (38) is in a contacting and facing relation to the second-lens first mating surface (58).

2. The method of claim 1, wherein the steps of first machining and second machining each include the step of
machining by precision diamond-point turning.

3. The method of claim 1, wherein the step of first machining includes the step of
first machining the first-lens first mating surface (38) into the first-lens rim (34) to a first-lens-first-mating-surface tolerance of less than about 1.27 µm (0.00005 inch), and the step of second machining includes the step of
second machining the second-lens first mating surface (58) into the second-lens rim (54) to a second-lens-first-mating-surface tolerance of less than about 1.27 µm (0.00005 inch).

4. The method of claim 1, including an additional step of
applying a non-transmissive coating (44) overlying that portion of the first-lens rim (34) that is included in the first-lens first mating surface (38).

5. The method of claim 1, wherein
the step of first machining includes the step of
first machining the first-lens first mating surface (38) to include
a first-lens axial positioning surface (40) oriented at an angle to the light path of less than about 45 degrees, and
a first-lens pilot surface (42) oriented at an angle to the light path of more than about 45 degrees, and
the step of second machining includes the step of
second machining the second-lens first mating surface (58) to include
a second-lens axial positioning surface (60) oriented at an angle to the light path of less than about 45 degrees, and
a second-lens pilot surface (62) oriented at an angle to the light path of more than about 45 degrees.

6. The method of claim 1, wherein
the step of first machining includes the step of
first machining the first-lens first mating surface (38) to include
a first-lens axial positioning surface (40) oriented substantially parallel to the light path, and
a first-lens pilot surface (42) oriented substantially perpendicular to the light path, and
the step of second machining includes the step of
second machining the second-lens first mating surface (58) to include
a second-lens axial positioning surface (60) oriented substantially parallel to the light path, and
a second-lens pilot surface (62) oriented substantially perpendicular to the light path.

7. The method of claim 1, wherein the first lens (30) and the second lens (50) are aligned to within a first-lens/second-lens tolerance of not greater than about 1.27 µm (0.00005 inch).

8. The method of claim 1, further including
preparing a housing (22) having
an inner wall (130), and
a housing mating surface (132) extending radially inwardly from the inner wall (130) of the housing (22), and
machining a lens-group mating surface (150) on a lens group (24) comprising the first lens (30) and the second lens (50), wherein the housing mating surface (132) is conformable to the lens-group mating surface (150), and wherein the lens group (24) and the housing (22) are aligned to within a lens-group/housing tolerance of not greater than about 1.27 µm (0.00005 inch), and
the step of assembling includes the steps of
assembling the lens-group (24) within the inner wall (130) such that the housing mating surface (132) is in a facing and contacting relation to the lens-group mating surface (150), and
biasing the lens-group mating surface (150) toward the housing mating surface (132) using a resilient biasing element (138).

9. The method of claim 1, wherein the step of first machining includes the step of
first machining a first-lens second mating surface (45) oppositely disposed to the first-lens first mating surface (38), and wherein the method further includes
third preparing a nonplastic third lens (70) having
a third-lens central optical region (72), and
a third-lens rim (74) between the third-lens central optical region (72) and a third-lens periphery (76) of the third lens (70), and
third machining a third-lens first mating surface (78) into the third-lens rim (74), wherein the third-lens first mating surface (78) is conformable to the first-lens second mating surface (45), and wherein
the step of assembling includes
the step of assembling the first lens (30) to the third lens (70) so that the first-lens second mating surface (45) is in a contacting and facing relation to the third-lens first mating surface (78), and
wherein the first lens (30) and the third lens (70) are aligned to within a first-lens/third-lens tolerance of not greater than about 1.27 µm (0.00005 inch).

10. The method of claim 1, wherein the step of second machining includes the step of
second machining a second-lens second mating surface (64) oppositely disposed to the second-lens first mating surface (58), and wherein the method further includes
preparing a spacer-tube (90),
spacer-tube machining into the spacer-tube (90)
a spacer-tube first mating surface (92) conformable to the second-lens second mating surface (64), and
a spacer-tube second mating surface (102) oppositely disposed from the spacer-tube first mating surface (92), and
fourth preparing a nonplastic fourth lens (110) having
a fourth-lens central optical region (112), and
a fourth-lens rim (114) between the fourth-lens central optical region (112) and a fourth-lens periphery (116) of the fourth lens (110), and
fourth machining a fourth-lens first mating surface (118) into the fourth-lens rim (114), wherein the fourth-lens first mating surface (118) is conformable to the spacer-tube second mating surface (102), and wherein
the step of assembling includes the steps of
assembling the spacer tube (90) to the second lens (50) so that the spacer-tube first mating surface (92) is in a contacting and facing relation to the second-lens second mating surface (64), and
assembling the fourth lens (110) to the spacer tube (90) so that the fourth-lens first mating surface (118) is in a contacting and facing relation to the spacer-tube second mating surface (102), wherein
the spacer tube (90) and the fourth lens (110) are aligned to within a spacer tube/fourth-lens tolerance of not greater than about 1.27 µm (0.00005 inch).

11. A lens structure (20) extending along a light path (26) and comprising a lens group (24) including:
a nonplastic first lens (30) having
a first-lens central optical region (32) lying in the light path (26), and
a first-lens rim (34) between the first-lens central optical region (32) and a first-lens periphery (36) of the first lens (30) and lying out of the light path (26), the first-lens rim (34) including a first-lens first mating surface (38); and
a nonplastic second lens (50) having
a second-lens central optical region (52) lying in the light path (26), and
a second-lens rim (54) between the second-lens central optical region (52) and a second-lens periphery (56) of the second lens (50) and lying out of the light path (26), the second-lens rim (54) including a second lens first mating surface (58) conformable to the first-lens first mating surface (38) and in a facing and contacting relation to the first lens first mating surface (38), **characterised in that**:
the first lens (30) and the second lens (50) are aligned to within a first-lens/second lens tolerance of not greater than about 1.27 µm (0.00005 inch); and
a radial air-bleed groove (43) is cut intro at least one of the mating surfaces of the first lens (30) and the second lens (50).

12. The lens structure of claim 11, wherein the first-lens first mating surface (38) and the second-lens first mating surface (58) are each a machined surface.

## Patentansprüche

1. Verfahren zur Herstellung einer Linsenstruktur (20) relativ zu einem Lichtweg (26), der durch die Linsenstruktur (20) hindurch verläuft, wobei das Verfahren folgende Schritte beinhaltet:
zuerst erfolgendes Herstellen einer nicht aus Kunststoff bestehenden ersten Linse (30) mit
einem mittleren optischen Bereich (32) der ersten Linse, und
einem Rand (34) der ersten Linse zwischen dem mittleren optischen Bereich (34) der ersten Linse und einem äußeren Umfang (36) der ersten Linse von der ersten Linse (30);
zuerst erfolgendes Bearbeiten einer ersten passenden Oberfläche (38) der ersten Linse aus dem Rand (34) der erste Linse;
als zweites erfolgendes Herstellen einer nicht aus Kunststoff bestehenden zweiten Linse (50) mit
einem mittleren optischen Bereich (52) der zweiten Linse, und
einem Rand (54) der zweiten Linse zwischen dem mittleren optischen Bereich (52) der zweiten Linse und einem äußeren Umfang (56) der zweiten Linse von der zweiten Linse (50);
als zweites erfolgendes Bearbeiten einer ersten passenden Oberfläche (58) der zweiten Linse aus dem Rand (54) der zweiten Linse, wobei die erste passende Oberfläche (58) der zweiten Linse mit der ersten passenden Oberfläche (38) der ersten Linse zusammenpasst,
wobei zumindest entweder der Schritt des zuerst erfolgenden Bearbeitens oder der Schritt des als zweites erfolgenden Bearbeitens den Schritt des Einarbeitens einer radialen Entlüftungskerbe (43) beinhaltet, die in die passende Oberfläche, die gerade bearbeitet wird, geschnitten wird; und
Zusammenbauen der ersten Linse (30) mit der zweiten Linse (50), so dass die erste passende Oberfläche der ersten Linse die erste passende Oberfläche (58) der zweiten Linse berührt und dieser gegenüberliegt.

2. Verfahren nach Anspruch 1, wobei die Schritte des zuerst erfolgenden Bearbeitens und des als zweites erfolgenden Bearbeitens jeweils folgenden Schritt beinhalten:
Bearbeiten durch ein Präzisions-Diamantspitzendrehen.

3. Verfahren nach Anspruch 1, wobei der Schritt des zuerst erfolgenden Bearbeitens folgenden Schritt beinhaltet:
zuerst erfolgendes Bearbeiten der ersten passenden Oberfläche (38) der ersten Linse aus dem Rand (34) der ersten Linse auf eine Toleranz einer ersten passenden Oberfläche der ersten Linse von weniger als etwa 1,27 µm (0,000127 cm), und wobei der Schritt des als zweites erfolgenden Bearbeitens folgenden Schritt beinhaltet:
als zweites erfolgendes Bearbeiten der ersten passenden Oberfläche (58) der zweiten Linse aus dem Rand (54) der zweiten Linse auf eine Toleranz einer ersten passenden Oberfläche der zweiten Linse von weniger als etwa 1,27 µm (0,000127 cm).

4. Verfahren nach Anspruch 1, beinhaltend einen zusätzlichen Schritt des
Auftragens einer undurchlässigen Beschichtung (44), die über jenem Bereich des Rands (34) der ersten Linse liegt, der in der ersten passenden Oberfläche (38) der ersten Linse beinhaltet ist.

5. Verfahren nach Anspruch 1, wobei
der Schritt des als erstes erfolgenden Bearbeitens folgenden Schritt beinhaltet:
als erstes erfolgendes Bearbeiten einer ersten passenden Oberfläche (38) der ersten Linse, so dass diese aufweist:
eine axiale Positionierungsoberfläche (40) der ersten Linse, die in einem Winkel zu dem Lichtweg von weniger als etwa 45 Grad ausgerichtet ist, und
eine Pilotoberfläche (42) der ersten Linse, die in einem Winkel zu dem Lichtweg von mehr als 45 Grad ausgerichtet ist, und
wobei der Schritt des als zweites erfolgenden Bearbeitens folgenden Schritt beinhaltet:
als zweites erfolgendes Bearbeiten der ersten passenden Oberfläche (58) der zweiten Linse, so dass diese aufweist:
eine axiale Positionierungsoberfläche (60) der zweiten Linse, die in einem Winkel zu dem Lichtweg von weniger als etwa 45 Grad ausgerichtet ist, und
eine Pilotoberfläche (62) der zweiten Linse, die in einem Winkel zu dem Lichtweg von weniger als etwa 45 Grad ausgerichtet ist.

6. Verfahren nach Anspruch 1, wobei
der Schritt des zuerst erfolgenden Bearbeitens folgenden Schritt beinhaltet:
zuerst erfolgendes Bearbeiten der ersten passenden Oberfläche (38) der ersten Linse, so dass diese aufweist:
eine axiale Positionierungsoberfläche (40) der ersten Linse, die im Wesentlichen parallel zu dem Lichtweg ausgerichtet ist, und
eine Pilotoberfläche (42) der ersten Linse, die im Wesentlichen senkrecht zu dem Lichtweg ausgerichtet ist, und
wobei der Schritt des als zweites erfolgenden Bearbeitens folgenden Schritt beinhaltet:
als zweites erfolgendes Bearbeiten der ersten passenden Oberfläche (58) der zweiten Linse, so dass diese aufweist:
eine axiale Positionierungsoberfläche (60) der zweiten Linse, die im Wesentlichen parallel zu dem Lichtweg ausgerichtet ist, und
eine Pilotoberfläche (62) der zweiten Linse, die im Wesentlichen senkrecht zu dem Lichtweg ausgerichtet ist.

7. Verfahren nach Anspruch 1, wobei die erste Linse (30) und die zweite Linse (50) auf einen Wert innerhalb einer Toleranz zwischen der ersten Linse und der zweiten Linse von nicht mehr als etwa 1,27 µm (0,000127 cm) ausgerichtet werden.

8. Verfahren nach Anspruch 1, ferner beinhaltend:
Erstellen eines Gehäuses (22) mit
einer inneren Wand (130) und
einer passenden Oberfläche (132) eines Gehäuses, die sich radial einwärts von der inneren Wand (130) des Gehäuses (22) erstreckt, und
Bearbeiten einer passenden Oberfläche (150) einer Linsengruppe auf einer Linsengruppe (24), die die erste Linse (30) und die zweite Linse (50) aufweist, wobei die passende Oberfläche (132) eines Gehäuses mit der passenden Oberfläche (150) einer Linsengruppe zusammenpasst, und wobei die Linsengruppe (24) und das Gehäuse (22) auf einen Wert innerhalb einer Toleranz zwischen einer Linsengruppe und einem Gehäuse von nicht mehr als etwa 1,27 µm (0,000127 cm) ausgerichtet wird, und
wobei der Schritt des Zusammenbauens folgende Schritte beinhaltet:
Zusammenbauen der Linsengruppe (24) innerhalb der inneren Wand (130), so dass die passende Oberfläche (132) eines Gehäuses der passenden Oberfläche (150) einer Linsengruppe gegenüberliegt und diese berührt, und
Vorspannen der passenden Oberfläche (150) einer Linsengruppe zu der passenden Oberfläche (132) eines Gehäuses unter Verwendung eines elastischen Vorspannelements (138).

9. Verfahren nach Anspruch 1, wobei der der Schritt des zuerst erfolgenden Bearbeitens folgenden Schritt beinhaltet:
zuerst erfolgendes Bearbeiten einer zweiten passenden Oberfläche (45) der ersten Linse, die der ersten passenden Oberfläche (38) der ersten Linse gegenüberliegend angeordnet ist, und wobei das Verfahren ferner folgende Schritte beinhaltet:
als drittes erfolgendes Herstellen einer nicht aus Kunststoff bestehenden dritten Linse (70) mit
einem mittleren optischen Bereich (72) der dritten Linse, und
einem Rand (74) der dritten Linse zwischen dem mittleren optischen Bereich (72) der dritten Linse und einem äußeren Umfang (76) der dritten Linse von der dritten Linse (70),
als drittes erfolgendes Bearbeiten einer ersten passenden Oberfläche (78) der dritten Linse aus dem Rand (74) der dritten Linse, wobei die erste passende Oberfläche (78) der dritten Linse mit der zweiten passenden Oberfläche (45) der ersten Linse zusammenpasst, und wobei
der Schritt des Zusammenbauens beinhaltet
den Schritt des Zusammenbauens der ersten Linse (30) mit der dritten Linse (70), so dass die zweite passende Oberfläche (45) der ersten Linse die erste passende Oberfläche (78) der dritten Linse berührt und dieser gegenüberliegt, und
wobei die erste Linse (30) und die dritte Linse (70) auf einen Wert innerhalb einer Toleranz zwischen der ersten Linse und der dritten Linse von nicht mehr als etwa 1,27 µm (0,000127 cm) ausgerichtet werden.

10. Verfahren nach Anspruch 1, wobei der Schritt des als zweites erfolgenden Bearbeitens folgenden Schritt beinhaltet:
als zweites erfolgendes Bearbeiten einer zweiten passenden Oberfläche (64) der zweiten Linse, die der ersten passenden Oberfläche (58) der zweiten Linse gegenüberliegend angeordnet ist, und wobei das Verfahren ferner folgende Schritte beinhaltet:
Erstellen eines Abstandsrohrs (90),
Bearbeiten des Abstandsrohr zu dem Abstandrohr (90),
wobei eine erste passende Oberfläche (92) eines Abstandsrohrs mit der zweiten passenden Oberfläche (64) der zweiten Linse zusammenpasst, und
eine zweite passende Oberfläche (102) eines Abstandsrohrs der ersten passenden Oberfläche (92) eines Abstandsrohrs gegenüberliegen angeordnet ist, und
als viertes erfolgendes Herstellen einer nicht aus Kunststoff bestehenden vierten Linse (110) mit
einem mittleren optischen Bereich (112) der vierten Linse, und
einem Rand (114) der vierten Linse zwischen dem mittleren optischen Bereich (112) der vierten Linse und einem äußeren Umfang (116) der vierten Linse von der vierten Linse (110), und
als viertes erfolgendes Bearbeiten einer ersten passenden Oberfläche (118) der vierten Linse aus dem Rand (114) der vierten Linse, wobei die erste passende Oberfläche (118) der vierten Linse mit der zweiten passenden Oberfläche (102) eines Abstandsrohrs zusammenpasst, und wobei
der Schritt des Zusammenbauens folgende Schritte beinhaltet:
Zusammenbauen des Abstandsrohrs (90) mit der zweiten Linse (50), so dass die erste passende Oberfläche (92) eines Abstandsrohrs die zweite passende Oberfläche (64) der zweiten Linse kontaktiert und dieser gegenüberliegt, und
Zusammenbauen der vierten Linse (110) mit dem Abstandsrohr (90), so dass die erste passende Oberfläche (118) der vierten Linse die zweite passende Oberfläche (102) eines Abstandsrohrs berührt und dieser gegenüberliegt, wobei
das Abstandsrohr (90) und die vierte Linse (110) auf einen Wert innerhalb einer Toleranz zwischen einem Abstandsrohr und der vierten Linse von nicht mehr als etwa 1,27 µm (0,000127 cm) ausgerichtet wird.

11. Linsenstruktur (20), die sich entlang einem Lichtweg (26) erstreckt und eine Linsengruppe (24) aufweist, die beinhaltet:
eine nicht aus Kunststoff bestehende erste Linse (30) mit
einem mittleren optischen Bereich (32) der ersten Linse, der in dem Lichtweg (26) liegt, und
einem Rand (34) der ersten Linse zwischen dem mittleren optischen Bereich (32) der ersten Linse und einem äußeren Umfang (36) der ersten Linse von der ersten Linse (30), der außerhalb des Lichtwegs (26) liegt, wobei der Rand (34) der ersten Linse eine passende Oberfläche (38) der ersten Linse beinhaltet; und
eine nicht aus Kunststoff bestehende zweite Linse (50) mit
einem mittleren optischen Bereich (52) der zweiten Linse, der in dem Lichtweg (26) liegt, und
einem Rand (54) der zweiten Linse zwischen dem mittleren optischen Bereich (52) der zweiten Linse und einem äußeren Umfang (56) der zweiten Linse von der zweiten Linse (50), der außerhalb des Lichtwegs (26) liegt, wobei der Rand (54) der zweiten Linse eine erste passende Oberfläche (58) der zweiten Linse beinhaltet, die mit der ersten passenden Oberfläche (38) der ersten Linse zusammenpasst und der ersten passenden Oberfläche (38) der ersten Linse gegenüberliegt und diese berührt, **dadurch gekennzeichnet, dass**:
die erste Linse (30) und die zweite Linse (50) auf einen Wert innerhalb einer Toleranz zwischen der ersten Linse und der zweiten Linse von nicht mehr als 1,27 µm (0,000127 µm) ausgerichtet sind, und
eine radiale Entlüftungskerbe (43) in zumindest eine der passenden Oberflächen der ersten Linse (30) und der zweiten Linse (50) geschnitten ist.

12. Linsenstruktur nach Anspruch 11, wobei die erste passende Oberfläche (38) der ersten Linse und die erste passende Oberfläche (58) der zweiten Linse jeweils eine bearbeitete Oberfläche aufweisen.

## Revendications

1. Procédé de fabrication d'une structure de lentille (20) par rapport à un chemin optique (26) passant à travers la structure de lentille (20), comprenant les étapes :
de première préparation d'une première lentille non plastique (30) comportant :
une région optique centrale de première lentille (32), et
une bordure de première lentille (34) entre la région optique centrale de première lentille (32) et une périphérie de première lentille (36) de la première lentille (30) ;
de premier usinage d'une première surface d'emboîtement de première lentille (38) dans la bordure de première lentille (34) ;
de seconde préparation d'une seconde lentille non plastique (50) comportant :
une région optique centrale de seconde lentille (52) ; et
une bordure de seconde lentille (54) entre la région optique centrale de seconde lentille (52) et une périphérie de seconde lentille (56) de la seconde lentille (50) ;
de second usinage d'une première surface d'emboîtement de seconde lentille (58) dans la bordure de seconde lentille (54), dans lequel la première surface d'emboîtement de seconde lentille (58) peut s'adapter à la forme de la première surface d'emboîtement de première lentille (38),
au moins l'une des étapes de premier usinage et de second usinage comportant en outre l'étape d'usinage d'une gorge de purge d'air radiale (43) ménagée dans la surface d'emboîtement en cours d'usinage ; et
d'assemblage de la première lentille (30) avec la seconde lentille (50) de façon que la première surface d'emboîtement de première lentille (38) soit en relation de contact et de vis-à-vis avec la première surface d'emboîtement de seconde lentille (58).

2. Procédé selon la revendication 1, dans lequel les étapes de premier usinage et de second usinage comportent chacune l'étape :
d'usinage au moyen d'un tour à pointe de diamant de précision.

3. Procédé selon la revendication 1, dans lequel l'étape de premier usinage comprend l'étape :
de premier usinage de la première surface d'emboîtement de première lentille (38) dans la bordure de première lentille (34) à une tolérance près de première surface d'emboîtement de première lentille inférieure à environ 1,27 µm (0,00005 pouce) et l'étape de second usinage comprend l'étape :
de second usinage de la première surface d'emboîtement de seconde lentille (58) dans la bordure de seconde lentille (54) à une tolérance près de première surface d'emboîtement de seconde lentille inférieure à environ 1,27 µm (0,00005 pouce).

4. Procédé selon la revendication 1, comprenant une étape supplémentaire :
d'application d'un revêtement non transmissif (44) superposé à la partie de la bordure de première lentille (34) qui est incluse dans la première surface d'emboîtement de première lentille (38).

5. Procédé selon la revendication 1, dans lequel :
l'étape de premier usinage comprend l'étape :
de premier usinage de la première surface d'emboîtement de première lentille (38) afin qu'elle comporte :
une surface de positionnement axial de première lentille (40) orientée selon un angle qui, par rapport au chemin optique, est inférieur à environ 45 degrés, et
une surface pilote de première lentille (42) orientée selon un angle qui, par rapport au chemin optique, est supérieur à environ 45 degrés, et
l'étape de second usinage comprend l'étape :
de second usinage de la première surface d'emboîtement de seconde lentille (58) afin qu'elle comporte :
une surface de positionnement axial de seconde lentille (60) orientée selon un angle qui, par rapport au chemin optique, est inférieur à environ 45 degrés, et
une surface pilote de seconde lentille (62), orientée selon un angle qui, par rapport au chemin optique, est supérieur à environ 45 degrés.

6. Procédé selon la revendication 1, dans lequel :
l'étape de premier usinage comprend l'étape :
de premier usinage de la première surface d'emboîtement de première lentille (38) afin qu'elle comporte :
une surface de positionnement axial de première lentille (40) orientée sensiblement parallèlement au chemin optique, et
une surface pilote de première lentille (42) orientée sensiblement perpendiculairement au chemin optique, et
l'étape de second usinage comprend l'étape :
de second usinage de la première surface d'emboîtement de seconde lentille (58) afin qu'elle comporte :
une surface de positionnement axial de seconde lentille (60) orientée sensiblement parallèlement au chemin optique, et
une surface pilote de seconde lentille (62) orientée sensiblement perpendiculairement au chemin optique.

7. Procédé selon la revendication 1, dans lequel la première lentille (30) et la seconde lentille (50) sont alignées à une tolérance près entre la première lentille et la seconde lentille qui n'est pas supérieure à environ 1,27 µm (0,00005 pouce).

8. Procédé selon la revendication 1, comprenant en outre :
la préparation d'un boîtier (22) comportant :
une paroi intérieure (130), et
une surface d'emboîtement de boîtier (132) s'étendant radialement vers l'intérieur en partant de la paroi intérieure (130) du boîtier (22), et
l'usinage d'une surface d'emboîtement de groupe de lentilles (150) sur un groupe de lentilles (24) comprenant la première lentille (30) et la seconde lentille (50), dans lequel la surface d'emboîtement de boîtier (132) peut s'adapter à la forme de la surface d'emboîtement de groupe de lentilles (150), et dans lequel le groupe de lentilles (24) et le boîtier (22) sont alignés à une tolérance près entre le groupe de lentilles et le boîtier qui n'est pas supérieure à environ 1,27 µm (0,00005 pouce), et
l'étape d'assemblage comprend les étapes :
d'assemblage du groupe de lentilles (24) à l'intérieur de la paroi intérieure (130) de façon que la surface d'emboîtement de boîtier (132) soit en relation de vis-à-vis et de contact avec la surface d'emboîtement de groupe de lentilles (150), et
poussée de la surface d'emboîtement de groupe de lentilles (150) vers la surface d'emboîtement de boîtier (132) en utilisant un élément de poussée élastique (138).

9. Procédé selon la revendication 1, dans lequel l'étape de premier usinage comprend l'étape
de premier usinage d'une seconde surface d'emboîtement de première lentille (45) disposée de façon opposée à la première surface d'emboîtement de première lentille (38), et dans lequel le procédé comprend en outre :
une troisième préparation d'une troisième lentille non plastique (70) comportant :
une région optique centrale de troisième lentille (72), et
une bordure de troisième lentille (74) entre la région optique centrale de troisième lentille (72) et une périphérie de troisième lentille (76) de la troisième lentille (70) , et
un troisième usinage d'une première surface d'emboîtement de troisième lentille (78) dans la bordure de troisième lentille (74), la première surface d'emboîtement de troisième lentille (78) pouvant s'adapter à la forme de la seconde surface d'emboîtement de première lentille (45), et dans lequel
l'étape d'assemblage comprend :
l'étape d'assemblage de la première lentille (30) avec la troisième lentille (70) de façon que la seconde surface d'emboîtement de première lentille (45) soit en relation de contact et de vis-à-vis avec la première surface d'emboîtement de troisième lentille (78), et
dans lequel la première lentille (30) et la troisième lentille (70) sont alignées à une tolérance près entre la première lentille et la troisième lentille qui n'est pas supérieure à environ 1,27 µm (0,00005 pouce).

10. Procédé selon la revendication 1, dans lequel l'étape de second usinage comprend l'étape
de second usinage d'une seconde surface d'emboîtement de seconde lentille (64) disposée de façon opposée à la première surface d'emboîtement de seconde lentille (58), et dans lequel le procédé comprend en outre :
la préparation d'un tube d'espacement (90),
un usinage de tube d'espacement, dans le tube d'espacement (90),
d'une première surface d'emboîtement de tube d'espacement (92) pouvant s'adapter à la forme de la seconde surface d'emboîtement de seconde lentille (64), et
d'une seconde surface d'emboîtement de tube d'espacement (102) disposée de façon opposée à la première surface d'emboîtement de tube d'espacement (92), et
de quatrième préparation d'une quatrième lentille non plastique (110) comportant
une région optique centrale de quatrième lentille (112), et
une bordure de quatrième lentille (114) entre la région optique centrale de quatrième lentille (112) et une périphérie de quatrième lentille (116) de la quatrième lentille (110), et
un quatrième usinage d'une première surface d'emboîtement de quatrième lentille (118) pour former la bordure de quatrième lentille (114), la première surface d'emboîtement de quatrième lentille (118) pouvant s'adapter à la forme de la seconde surface d'emboîtement de tube d'espacement (102), et dans lequel
l'étape d'assemblage comprend les étapes :
d'assemblage du tube d'espacement (90) avec la seconde lentille (50) de façon que la première surface d'emboîtement de tube d'espacement (92) soit en relation de contact et de vis-à-vis avec la seconde surface d'emboîtement de seconde lentille (64), et
d'assemblage de la quatrième lentille (110) avec le tube d'espacement (90) afin que la première surface d'emboîtement de quatrième lentille (118) soit en relation de contact et de vis-à-vis avec la seconde surface d'emboîtement de tube d'espacement (102), dans lequel
le tube d'espacement (90) et la quatrième lentille (110) sont alignés à une tolérance près entre le tube d'espacement et la quatrième lentille qui n'est pas supérieure à environ 1,27 µm (0,00005 pouce).

11. Structure de lentille (20) s'étendant le long d'un chemin optique (26) et comprenant un groupe de lentilles (24) comportant :
une première lentille non plastique (30) ayant :
une région optique centrale de première lentille (32) se situant sur le chemin optique (26), et
une bordure de première lentille (34) entre la région optique centrale de première lentille (32) et une périphérie de première lentille (36) de la première lentille (30) et se situant en dehors du chemin optique (26), la bordure de première lentille (34) comportant une première surface d'emboîtement de première lentille (38) ; et
une seconde lentille non plastique (50) comportant :
une région optique centrale de seconde lentille (52) se situant sur le chemin optique (26), et
une bordure de seconde lentille (54) entre la région optique centrale de seconde lentille (52) et une périphérie de seconde lentille (56) de la seconde lentille (50) et se situant en dehors du chemin optique (26), la bordure de seconde lentille (54) comportant une première surface d'emboîtement de seconde lentille (58) pouvant s'adapter à la forme de la première surface d'emboîtement de première lentille (38) et présentant une relation de vis-à-vis et de contact avec la première surface d'emboîtement de première lentille (38), **caractérisée en ce que**
la première lentille (30) et la seconde lentille (50) sont alignées à une tolérance près entre la première lentille et la seconde lentille qui n'est pas supérieure à environ 1,27 µm (0,00005 pouce) ; et
une gorge radiale de purge d'air (43) est découpée dans au moins l'une des surfaces d'emboîtement de la première lentille (30) et de la seconde lentille (50).

12. Structure de lentille selon la revendication 11, dans laquelle la première surface d'emboîtement de première lentille (38) et la première surface d'emboîtement de seconde lentille (58) sont chacune une surface usinée.
